# EUROPEAN PATENT SPECIFICATION

(11) **EP 2 757 715 B1**
(45) Date of publication and mention of the grant of the patent: **05.06.2019**
(21) Application number: 13152034.8
(22) Date of filing: 21.01.2013
(51) Int. Cl.: H04J 14/02

(54) **Optical transmission link protection device**
Vorrichtung zum Schutz einer optischer Übertragungsverbindung
Dispositif de protection de liaison de transmission optique

(43) Date of publication of application: 23.07.2014
(73) Proprietor: Huawei Technologies Co., Ltd., Longgang District Shenzhen, Guangdong 518129 (CN); Deutsche Telekom AG, 53113 Bonn (DE)
(72) Inventor: Hostalka, Peter, 80992 Munich (DE); Gunkel, Matthias, 64291 Darmstadt (DE); Weiershausen, Werner, 64859 Eppertshausen (DE)
(74) Representative: Kreuz, Georg Maria

(56) References cited:
- EP-A1- 2 493 101
- WO-A2-2004/008833
- US-A1- 2005 123 297
- US-A1- 2009 103 915
- LI M-J ET AL: "Transparent Optical Protection Ring Architectures and Applications", JOURNAL OF LIGHTWAVE TECHNOLOGY, IEEE SERVICE CENTER, NEW YORK, NY, US, vol. 23, no. 10, 1 October 2005 (2005-10-01), pages 3388-3403, XP011141434, ISSN: 0733-8724, DOI: 10.1109/JLT.2005.856240
- PAPADIMITRIOU ALCATEL D: "Optical Rings and Hybrid Mesh-Ring Optical Networks draft-papadimitriou-optical-rings-02.txt; draft-papadimitriou-optical-rings-02.txt", 20011101, no. 2, 1 November 2001 (2001-11-01), XP015004770, ISSN: 0000-0004

## Description

### BACKGROUND OF THE INVENTION

The present invention relates to an optical transmission link protection device, an optical reception link protection device, an optical link protection device and a method for optical link protection.

With the consolidation of router locations in the IP backbone, as it can be observed within many network operators, the amount of traffic which has to be handled by these locations increases more and more. By this, also the safeguarding against failures becomes more and more important. Therefore, in many cases the router locations in big cities are constructed in redundant sites or fire prevention sections. One of the routers will be assigned to the A-network the other to the B-network. During normal operation both routers share the network load equally. The A-routers as well as the B-routers are meshed via optical transport equipment. Within one city the A-locations and the B-locations are connected via links of a few hundred meters up to 10-15 km.

Failures in a long distance network with redundant equipment are mostly caused by fiber breaks in the long distance cables due to construction work or similar. In case of a failure in the long distance cable an A-router can now transfer the whole source traffic via the intra-city link to the B-router. From there the traffic will be transferred via disjoint fibers to other B-routers and finally via an intra-city link to the A-router of the destination city. This description is significantly simplified. Today in real networks several mechanisms interwork. Firstly in the IP/MPLS (Internet Protocol/ Multi-Protocol Label Switching) network a Fast-Reroute (FRR) mechanism is initialized, which carries out a local recovery within 50 ms. With this, the high-priority traffic can be protected via the intra-city links quasi instantly. After that an IP Routing protocol, e.g. the Interior Gateway Protocol (IGP) is searching for a new link between the routers based on predefined metrics. This process will be finished after one to two seconds. Finally the fiber will be repaired by technical personnel and the traffic is switched back to the original route. The requirements for the qualification of the personnel are high, as it needs to be acted quickly and precisely in order to avoid penalties due to not fulfilled quality assurances.

In order to carry out FRR and IGP successfully it is necessary to provide sufficient spare capacity in the layer where the protection takes place. In many cases this requirement makes it necessary that the router interfaces can be utilized only up to 50 % of their capacity, because in case of a failure the other interface has to take over the whole traffic respectively (so called failure case rule). During normal operation this additional installed capacity is mostly unused and will only be filled with traffic in case of a failure. While also considering that interfaces in the IP layer are very expensive, it will be obvious immediately that such a protection concept is not very efficient from a network operator's perspective.

While in current traditional IP networks the packets pass through transit routers in many locations before they reach the destination router, in future IP networks it will be more intensively made use of arranging hat packets in the source router in that way, that packets with same destination address will be put on a common wavelength. By that a wavelength can be transferred to the destination router via optical nodes. This is referred as optical transparent wavelength routes. This task is taken over by reconfigurable optical add/drop multiplexers (ROADM). To this effect IP networks with a subordinated ROADM layer follow a multilayer approach. It should be mentioned that not in any case it is economically useful to use a separate wavelength for every traffic relation. Especially if the traffic between two nodes is very low it is often of advantage to combine the traffic in an intermediate node with other traffic and put it on a common wavelength afterwards. This is called a translucent approach because the requirement of full optical transparency is softened in order to reach minimum costs. In the electrical layer of packets, frames and circuits the optimized multiplexing under network view is called Grooming or Traffic Engineering (TE). Grooming/TE is today state-of-the-art and is used in modern networks.

Generally, a multilayer resilience requires a complex interacting of three mechanisms which are FRR (Fast Reroute) on the MPLS (Multi-Protocol Label Switching) layer, IGP (Interior Gateway Protocol) on the IP (Internet Protocol) Routing layer and optical restoration on the physical layer. A standardized multilayer control plane is required.

A further disadvantage of multilayer resilience is the need to protect the QoS (Quality of Service) traffic with the FRR mechanism via the intra-city links. For this, normally so-called grey interfaces are used. They are permanently installed, even during error-free operation, because an ad-hoc installation within 50 ms is practically impossible. Although grey interfaces are much cheaper as colored WDM interfaces, they are responsible for a significant amount of cost, i.e. network complexity, in the total consideration.

Finally CD (colorless and directionless) ports in the ROADMs (reconfigurable optical add/drop multiplexers) are prerequisite for a flexible configuration of the restored wavelengths and their source direction in a meshed optical transparent/translucent network. Only by this, an optical interface can be switched flexibly. In order to maximize the probability of restoring a connection it is necessary that the input port on the ROADM can deal with a flexible wavelength and switch it to any output port.

There is a need to improve all three items without losing the cost advantage by significantly increasing the maximum interface load. This cost advantage is generally not available in ROADM based networks, because the use of ROADM would annihilate the cost advantage in the optical layer.

US 2005/0123297 A1 discloses a transmission apparatus including n transmitting side protection sections provided in correspondence with the number of wavelengths capable of being transmitted by wavelength multiplexing. Each transmitting side protection section comprises an optical coupler and signal processing sections. Optical signals from the signal processing section are output to two Wavelength Multiplexing sections. "Transparent Optical Protection Ring Architectures" JOURNAL OF LIGHTWAVE TECHNOLOGY, IEEE SERVICE CENTER, NEW YORK, NY, US, vol. 23, no. 10, 1 October 2005 (2005-10-01), pages ISSN: 0733-8724, DOI: 10.1109/JTL. 2005.856240 discloses transparent optical ring architectures and applications.

WO 2004/008833 A2 describes a method and system for providing tandem protection in a communication system. Fig. 3 of WO2004/008833 shows a communication system with a plurality of transceivers and a protection transceiver. The outputs of the transceivers are divided at splitters and directed into diverse communication paths.

EP 24931401 A1 relates to Fast Setup Optical Multiplex Section Protection (OMSP) when using coherent optical detection.

### SUMMARY OF THE INVENTION

It is the object of the invention to provide a resilience concept for a multilayer optical network of low complexity, high efficiency and high reliability.

This object is achieved by the features of the independent claims. Further implementation forms are apparent from the dependent claims, the description and the figures.

The invention is based on the finding that by using an optical link protection such that every link is transported via two disjoint edges respectively, both edges protect each other and thus cannot be exposed to the same risk. Furthermore, one protection per link can be used, i.e. in case of several hops each hop is protected in itself. The available WDM (wavelength division multiplex) spectrum on the fiber is assigned to both sub networks (denoted as A and B) according to a useful process in equal or near equal parts. One possible assignment is to assign, e.g. arbitrarily, the odd wavelength numbers to the A-network and the even wavelength numbers to the B-network. Without link protection only odd wavelengths would be present on the outputs of the ROADM in a separate unprotected A-network. Only the odd wavelengths would then be transferred via the long distance fibers. For the B-network the statement applies thus reverse, i.e. only the even wavelengths would be transferred via the long distance fibers. By using the optical link protection as described herein after, every link is transported via two disjoint edges respectively and both, odd and even wavelengths are transferred together via the long distance fiber. Such technique provides a resilience concept for a multilayer optical network of low complexity, high efficiency and high reliability.

According to an aspect of the invention, an additional device is placed immediately after the ROADM outputs and before the long-distance fibers. The device comprises a 3dB splitter, that is, a 3dB coupler, and an interleaver which combines the odd and even wavelengths from both sub networks. The identical copies of the odd and even WDM spectra from both sub networks are connected crosswise via short intra-city links. Thus, identical spectra are transferred via the disjoint long-distance fibers. From the point of doubling by the 3dB couplers, any random single failure will not lead to a loss of the connection because there is always a spare capacity. On the output of the long-distance fibers, another interleaver is connected which separates even and odd wavelengths again. A fast optical switch selects which of the WDM spectra shall be switched through and which shall be blocked. In normal operation both WDM spectra are identical as described above, only in case of a failure one can be dropped out or filled only by optical amplifier noise. A reasonable rule for the switching can therefore be derived directly from the power level at the input. In any case also during a long-distance fiber break either an exclusively odd (A network) or even (B network) wavelength spectrum is present at the output of the switch, which serves as input signal for a ROADM at the destination location. As usual in ROADM based networks, the ROADM network element may switch wavelengths to different directions to remote destinations or drop them locally.

Such an additional device provides a low complex, high efficient and reliable resilience for a multilayer optical network, as will be presented in the following.

In order to describe the invention in detail, the following terms, abbreviations and notations will be used:
- IP:: Internet Protocol.
The Internet Protocol (IP) is the principal communications protocol used for relaying datagrams (also known as network packets) across an internetwork using the Internet Protocol Suite responsible for routing packets across network boundaries. It is the primary protocol that establishes the Internet.
- MPLS:: Multi-Protocol Label Switching.
MPLS is a highly scalable, protocol agnostic, data-carrying mechanism. In an MPLS network, data packets are assigned labels. Packet-forwarding decisions are made solely on the contents of this label, without the need to examine the packet itself. This allows one to create end-to-end circuits across any type of transport medium, using any protocol.
- GMPLS:: Generalized Multi-Protocol Label Switching.
GMPLS is a protocol suite extending MPLS to manage further classes of interfaces and switching technologies other than packet interfaces and switching, such as time division multiplex, layer-2 switch, wavelength switch and fiber-switch.
- FRR:: Fast-Reroute.
Fast-Reroute is a MPLS resiliency technology to provide fast traffic recovery upon link or router failures for mission critical services. Upon any single link or node failures, it could be able to recover impacted traffic flows in the level of 50 ms.
- IGP:: Interior Gateway Protocol.
An interior gateway protocol is a routing protocol that is used to exchange routing information within an autonomous system.
- QoS:: Quality of Service.
Quality of service is the ability to provide different priority to different applications, users, or data flows, or to guarantee a certain level of performance to a data flow. For example, a required bit rate, delay, jitter, packet dropping probability and/or bit error rate may be guaranteed.
- WDM:: Wavelength-Division Multiplex.
WDM is the practice of multiplying the available capacity of optical fibers through use of parallel channels, each channel on a dedicated wavelength of light. This requires a wavelength division multiplexer in the transmitting equipment and a de-multiplexer in the receiving equipment.

- odd, even wavelength:: Wavelengths of light being carried by an optical fiber are denoted as λᵢ. An odd index i denotes the odd wavelengths and an even index i denotes the even wavelengths.
- ROADM:: Reconfigurable Optical Add/Drop Multiplexer.
A ROADM is an all-optical subsystem that enables remote configuration of wavelengths at any node. It is software-provisionable so that a network operator can choose whether a wavelength is added, dropped or passed through the node. The technologies used comprise wavelength blocking, planar lightwave circuit and wavelength sensitive switching.
- CD:: colourless and directionless.
Colourless means that any wavelength, i.e. colour, can be assigned to any port of the ROADM completely by software control and without a technician on site. Directionless ROADMs allow any wavelength to be routed to any direction served by the node, by software control, and without physical rewiring.
- L0, L1:: Layer 0 (physical layer), Layer 1 (data link layer) of the OSI model.
The physical layer defines electrical and physical specifications for devices. In particular, it defines the relationship between a device and a transmission medium, such as a copper or fiber optical cable. The data link layer provides the functional and procedural means to transfer data between network entities and to detect and possibly correct errors that may occur in the physical layer.
- TE:: Traffic Engineering.
Traffic Engineering is the technique using basic knowledge of statistics including queuing theory, the nature of traffic, their practical models, their measurements and simulations to make predictions and to plan telecommunication networks such as a telephone network or the Internet. These tools and basic knowledge help provide reliable service at lower cost.

According to a first aspect, the invention relates to an optical transmission link protection device, comprising: an optical splitter, configured for receiving a first optical transmission link carrying a first plurality of wavelengths, the optical splitter being configured to split the first optical transmission link into a main and a redundant sub-link, both sub-links carrying the first plurality of wavelengths; and an optical combiner, coupled to the optical splitter and configured for receiving a redundant sub-link of a second optical transmission link carrying a second plurality of wavelengths, the optical combiner being configured to combine the main sub-link of the first optical transmission link and the redundant sub-link of the second optical transmission link for providing a protected optical transmission link carrying both, the first plurality of wavelengths and the second plurality of wavelengths.

According to the first aspect, cost savings can be realized by giving up the direct connection between A and B location and by using mostly passive components. Further, a reduction of complexity can be realized because only L0 and L1 are needed for protection. Performance gains can be realized due to equally treatment of QoS and Best-Effort traffic. Fast switching times can be realized as the trigger is determined by physics and no complex software control is required. Higher reliability is achieved due to many passive components.

In a first possible implementation form of the optical transmission link protection device according to the first aspect, the first and the second optical transmission links are received from two locally disjoint sub-networks.

Using the optical transmission link protection device allows protecting optical links of locally disjoint sub-networks, for example sub-networks located in the same city. However, the link protection is not limited to these sub-networks. Any locally disjoint sub-networks can be protected no matter what distance lies between these sub-networks. The link protection scheme may be even applied to a single sub-network providing two optical links to be protected.

In a second possible implementation form of the optical transmission link protection device according to the first aspect as such or according to the first implementation form of the first aspect, a placing of the first plurality of wavelengths on the first transmission link is disjoint to a placing of the second plurality of wavelengths on the second optical transmission link.

By disjoint placing of the first plurality of wavelengths, e.g. the odd wavelengths and the second plurality of wavelengths, e.g. the even wavelengths on the transmission links, the protected transmission link can be loaded up to 100 percent.

In a third possible implementation form of the optical transmission link protection device according to the first aspect as such or according to any of the preceding implementation forms of the first aspect, the optical splitter comprises a passive 3dB optical coupler.

Passive components allow cost savings and higher reliability.

In a fourth possible implementation form of the optical transmission link protection device according to the first aspect as such or according to any of the preceding implementation forms of the first aspect, the optical combiner comprises an optical interleaver configured for interleaving the first plurality of wavelengths with the second plurality of wavelengths.

Optical interleaving allows to efficiently mix the first plurality of wavelengths with the second plurality of wavelengths on the protected optical fiber. The de-interleaving can be performed by the same device configured as optical de-interleaver which allows cost and complexity savings.

In a fifth possible implementation form of the optical transmission link protection device according to the first aspect as such or according to any of the preceding implementation forms of the first aspect, the first and the second optical transmission links carry equal parts of the first wavelengths and the second wavelengths as a whole.

When equal parts of the first wavelengths and the second wavelengths are carried on the optical transmission links, both networks A and B to be protected can be similarly or equally designed. Thus, cost reduction can be achieved and the network design is facilitated.

In a sixth possible implementation form of the optical transmission link protection device according to the first aspect as such or according to any of the preceding implementation forms of the first aspect, the first optical transmission link carries odd wavelengths and the second optical transmission link carries even wavelengths or vice versa.

Such an implementation is efficiently operating in WDM networks where a multiple of wavelengths are transported over the optical link. Discrimination by odd and even wavelengths is easy to implement.

According to a second aspect, the invention relates to an optical reception link protection device, comprising: an optical de-combiner, configured for receiving a protected optical reception link carrying both, a first plurality of wavelengths and a second plurality of wavelengths, the optical de-combiner being configured to separate the protected optical reception link into a main sub-link of a first optical reception link carrying the first plurality of wavelengths and a redundant sub-link of a second optical reception link carrying the second plurality of wavelengths; and an optical switch, coupled to the optical de-combiner, and configured for receiving a redundant sub-link of a first optical reception link carrying the first plurality of wavelengths, the optical switch being configured to switch one of the main sub-link of the first optical reception link and the redundant sub-link of the first optical transmission link.

The optical reception link protection device may be implemented as a separate device or integrated together with the optical transmission link protection device on one hardware platform. Thus, a flexible and modular hardware concept can be realized that allows adaptation to the customer's needs.

In a first possible implementation form of the optical reception link protection device according to the second aspect, the optical splitter is configured to switch the one of the main and the redundant sub-links based on a power level at its inputs.

Using the power level at the inputs of the optical splitter easily allows detection of a failure in the optical cable. If both power levels are equal or nearly equal, the optical fibers are free from defects. A different power level indicates a failure in one of the fibers, for example the fiber providing the lower power level.

In a second possible implementation form of the optical reception link protection device according to the second aspect as such or according to the first implementation form of the second aspect, the optical de-combiner comprises an optical de-interleaver configured for de-interleaving the first plurality of wavelengths from the second plurality of wavelengths.

Optical de-interleaving allows to efficiently reconstruct the first plurality of wavelengths and the second plurality of wavelengths from the protected optical fiber. Optical de-interleaver and optical interleaver can be performed by the same device, thereby allowing cost and complexity savings.

In a third possible implementation form of the optical reception link protection device according to the second aspect as such or according to any of the preceding implementation forms of the second aspect, the first plurality of wavelengths comprises odd wavelengths and the second plurality of wavelengths comprises even wavelengths or vice versa.

Such an implementation is efficiently operating in WDM networks where a multiple of wavelengths are transported over the optical link. Discrimination by odd and even wavelengths is easy to implement.

According to a third aspect, the invention relates to an optical link protection device, comprising: an optical transmission link protection device according the first aspect as such or according to any of the preceding implementation forms of the first aspect; and an optical reception link protection device according to the second aspect as such or according to any of the preceding implementation forms of the second aspect wherein the optical combiner and the optical de-combiner are implemented by two identically constructed optical interleavers.

Such an optical link protection device is saving costs as different devices can be implemented by the same hardware components.

According to a fourth aspect, the invention relates to a method for optical link protection, comprising: splitting a first optical transmission link carrying a first plurality of wavelengths into a main and a redundant sub-link, both sub-links carrying the first plurality of wavelengths; and combining the main sub-link of the first optical transmission link carrying the first plurality of wavelengths and a redundant sub-link of a second optical transmission link carrying a second plurality of wavelengths for providing a first protected optical transmission link carrying both, the first plurality of wavelengths and the second plurality of wavelengths.

By using a method according to the fourth aspect, cost savings can be realized by giving up the direct connection between A and B location and by using mostly passive components. Further, a reduction of complexity can be realized because only L0 and L1 are needed for protection. Performance gains can be realized due to equally treatment of QoS and Best-Effort traffic. Fast switching times can be realized as the trigger is determined by physics and no complex software control is required. Higher reliability is achieved due to many passive components.

In a first possible implementation form of the method according to the fourth aspect, the method further comprises: splitting the second optical transmission link carrying the second plurality of wavelengths into a main and the redundant sub-link, both sub-links carrying the second plurality of wavelengths; and combining the main sub-link of the second optical transmission link carrying the second plurality of wavelengths and the redundant sub-link of the first optical transmission link carrying the first plurality of wavelengths for providing a second protected optical transmission link carrying both, the first plurality of wavelengths and the second plurality of wavelengths.

The method allows redundancy between two optical links. The method is not restricted to redundant protection of two optical links. Even more than two optical links can be redundantly protected by combining a main sub-link with multiple sub-links of further networks. The wavelengths of all the networks can be combined to a combined plurality of wavelengths transported via the protected optical fiber and redundantly transported via other locally disjoint protected optical fibers.

In a second possible implementation form of the method according to the first implementation form of the fourth aspect, the method further comprises in case of a double failure on both, the first protected optical transmission link and the second protected optical transmission link: switching the first and the second pluralities of wavelengths to an alternate optical transmission link by using a Fast-Reroute mechanism and an Interior Gateway Protocol; repairing at least one of the first protected optical transmission link and the second protected optical transmission link; and switching the first and the second pluralities of wavelengths back to the repaired one of the first protected optical transmission link and the second protected optical transmission link.

The method is thus able to deal with double failures on both protected optical fibres. Local recovery can be performed within 50 milliseconds. Thus, the high-priority traffic can be protected against double failures in both main and redundant optical fibre quasi instantaneously.

By using the invention, cost savings can be realized by giving up the direct connection between A and B location equipped with short-reach or grey interfaces, by giving up flexible colorless & directionless add/drop ports of the ROADMs and by using mostly passive components. Except the optical switch only passive components are used. Use of the invention further results in reduction of complexity because of the following reasons: Only L0 and L1 are needed for protection. By simplified network design protection mechanisms are restricted to LO/L1. No interaction is required with other layers. By independence from router protection mechanisms, FRR and IGB may be used further on if there are any reasons for it, but it is not necessary. Use of the invention results in performance gain due to the following reasons: QoS and Best-Effort traffic are equally treated. There are no significant packet losses for Best-Effort traffic. Fast switching times can be realized as the trigger is determined by physics and no complex software control is required. Higher reliability is achieved due to many passive components.

The methods, systems and devices described herein may be implemented as software in a Digital Signal Processor (DSP), in a micro-controller or in any other side-processor or as hardware circuit within an application specific integrated circuit (ASIC).

The invention can be implemented in digital electronic circuitry, or in computer hardware, firmware, software, or in combinations thereof, e.g. in available hardware of conventional reconfigurable optical add/drop multiplexers or in new hardware dedicated for processing the optical link protection. The optical transmission and/or reception link protection device and/or method may be integrated in a conventional ROADM.

### BRIEF DESCRIPTION OF THE DRAWINGS

Further embodiments of the invention will be described with respect to the following figures, in which:
Fig. 1 shows a schematic diagram of a single optical link protection system 100 according to an implementation form;
Fig. 2 shows a schematic diagram of a multiple optical link protection system 200 according to an implementation form;
Fig. 3 shows a schematic diagram of an optical link protection system 300 protecting against double failures on both protected fiber links according to an implementation form; and
Fig. 4 shows a schematic diagram of a method 400 for optical link protection according to an implementation form.

### DETAILED DESCRIPTION OF EMBODIMENTS OF THE INVENTION

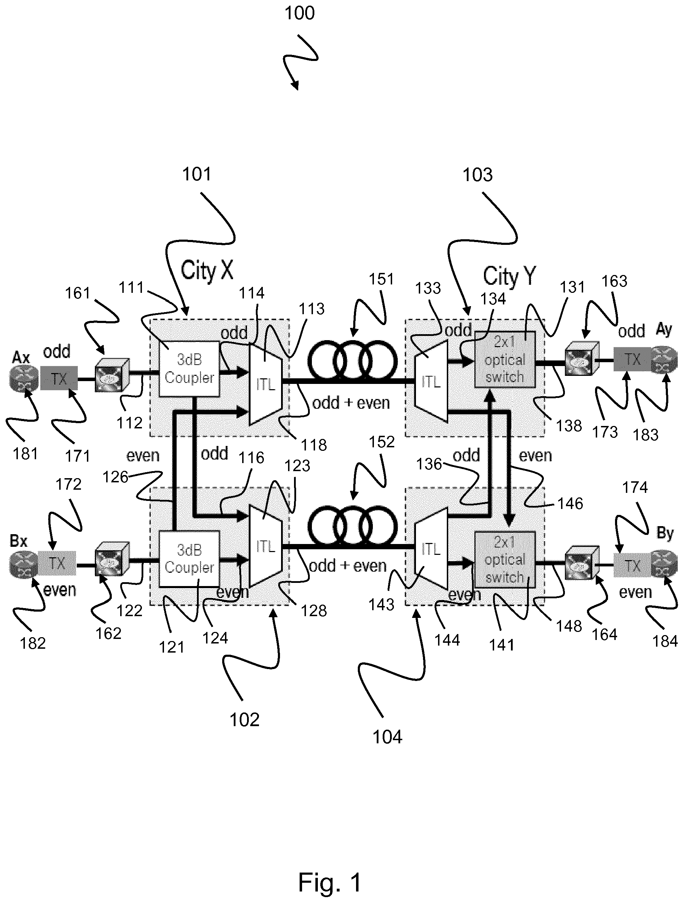

Fig. 1 shows a schematic diagram of a single optical link protection system 100 according to an implementation form.

The single optical link protection system 100 comprises a first network Ax 181 and a second network Bx 182 coupled to the first network Ax via short optical transmission links 116, 126, for example two networks located in the same city X. The first network Ax is coupled via a first long-distance optical fiber 151 to a third network Ay 183 and the second network Bx is coupled via a second long-distance optical fiber 152 to a fourth network By 184. The fourth network By is coupled to the third network Ay via short optical transmission links 136, 146. The third Ay and the fourth By network are located in another city Y, for example. Each of the four networks 181, 182, 183, 184 is coupled via a transceiver 171, 172, 173, 174, a reconfigurable optical add/drop multiplexer (ROADM) 161, 162, 163, 164 and an optical link protection device 101, 102, 103, 104 to the respective optical fibers 151, 152. A first 101 and a second 102 one of the optical link protection devices are configured as optical transmission link protection devices providing functionality for transmitting an optical signal while a third 103 and a fourth 104 one of the optical link protection devices are configured as optical reception link protection devices providing functionality for receiving an optical signal. However, each one of the optical link protection devices may be configured as both, optical transmission link protection device and optical reception link protection device.

The first optical transmission link protection device 101 comprises an optical splitter 111 and an optical combiner 113. The optical splitter 111 receives a first optical transmission link 112 carrying the odd wavelengths associated to the first network Ax 181. The optical splitter 111 splits the first optical transmission link 112 into a main 114 and a redundant 116 sub-link, such that both sub-links carry the odd wavelengths. The optical combiner 113 is coupled to the optical splitter 111 and receives a redundant sub-link 126 of a second optical transmission link 122 carrying the even wavelengths associated to the second network Bx. The optical combiner 113 combines the main sub-link 114 of the first optical transmission link 112 and the redundant sub-link 126 of the second optical transmission link 122 for providing a protected optical transmission link 118 carrying both, the odd and the even wavelengths.

The second optical transmission link protection device 102 comprises an optical splitter 121 and an optical combiner 123. The optical splitter 121 receives a second optical transmission link 122 carrying the even wavelengths associated to the second network Bx 182. The optical splitter 121 splits the second optical transmission link 122 into a main 124 and a redundant 126 sub-link, such that both sub-links carry the even wavelengths. The optical combiner 123 is coupled to the optical splitter 121 and receives a redundant sub-link 116 of the first optical transmission link 112 carrying the odd wavelengths associated to the first network Ax. The optical combiner 123 combines the main sub-link 124 of the second optical transmission link 122 and the redundant sub-link 116 of the first optical transmission link 112 for providing a protected optical transmission link 128 carrying both, the odd and the even wavelengths.

The third optical reception link protection device 103 comprises an optical de-combiner 133 and an optical switch 131. The optical de-combiner 133 receives the first protected optical transmission link 118 transmitted over the first optical fiber 151 as first protected optical reception link 118 carrying both, the odd and the even wavelengths. The optical de-combiner 133 separates the first protected optical reception link 118 into a main sub-link 134 of a first optical reception link 138 carrying the odd wavelengths and a redundant sub-link 146 of a second optical reception link 148 carrying the even wavelengths. The optical switch 131 is coupled to the optical de-combiner 133 and receives a redundant sub-link 136 of the first optical reception link 138 carrying the odd wavelengths. The optical switch 131 switches the main sub-link 134 of the first optical reception link 138 or the redundant sub-link 136 of the first optical transmission link 138 to the third ROADM 163.

The fourth optical reception link protection device 104 comprises an optical de-combiner 143 and an optical switch 141. The optical de-combiner 143 receives the second protected optical transmission link 128 transmitted over the second optical fiber 152 as second protected optical reception link 128 carrying both, the odd and the even wavelengths. The optical de-combiner 143 separates the second protected optical reception link 128 into a main sub-link 144 of a second optical reception link 148 carrying the even wavelengths and a redundant sub-link 136 of the first optical reception link 138 carrying the odd wavelengths. The optical switch 141 is coupled to the optical de-combiner 143 and receives a redundant sub-link 146 of the second optical reception link 148 carrying the even wavelengths. The optical switch 141 switches the main sub-link 144 of the second optical reception link 148 or the redundant sub-link 146 of the second optical transmission link 148 to the fourth ROADM 164.

In an implementation form, the first 112 and the second 122 optical transmission links are received from two locally disjoint sub-networks 181, 182. In an implementation form, a placing of the odd wavelengths on the first transmission link 112 is disjoint to a placing of the even wavelengths on the second optical transmission link 122. In an implementation form, the optical splitter 111 comprises a passive 3dB optical coupleras depicted in Fig. 1. In an implementation form, the optical combiner 113 comprises an optical interleaver for interleaving the odd wavelengths with the even wavelengths. In an implementation form, the first 112 and the second 122 optical transmission links carry equal parts of the odd and the even wavelengths as a whole. That is, odd and even wavelengths are distributed on the first and second transmission links in equal parts such that the protected optical transmission links 118, 128 carry equal parts of odd and even wavelengths. In an alternative implementation form, odd and even wavelengths are not equally distributed on the respective optical links. In an implementation form, the first optical transmission link 112 carries the odd wavelengths and the second optical transmission link 122 carries the even wavelengths or vice versa. In an implementation form, the optical switch 131 switches the main 134 or the redundant 136 sub-link based on a power level at its input. In an implementation form, the optical de-combiner 133 comprises an optical de-interleaver for de-interleaving the odd wavelengths from the even wavelengths. In an implementation form, the optical combiner 113 and the optical de-combiner 133 are implemented by two identically constructed optical interleavers.

The configuration as described above and depicted in Fig. 1 refers to one transmission direction. Assuming a bidirectional transmission, identical devices are located on both ends of the long-distance fiber pair 151, 152 with totally one 3dB coupler 111, two interleavers 113 and an optical switch 131 (not shown in Fig. 1 for clarity).

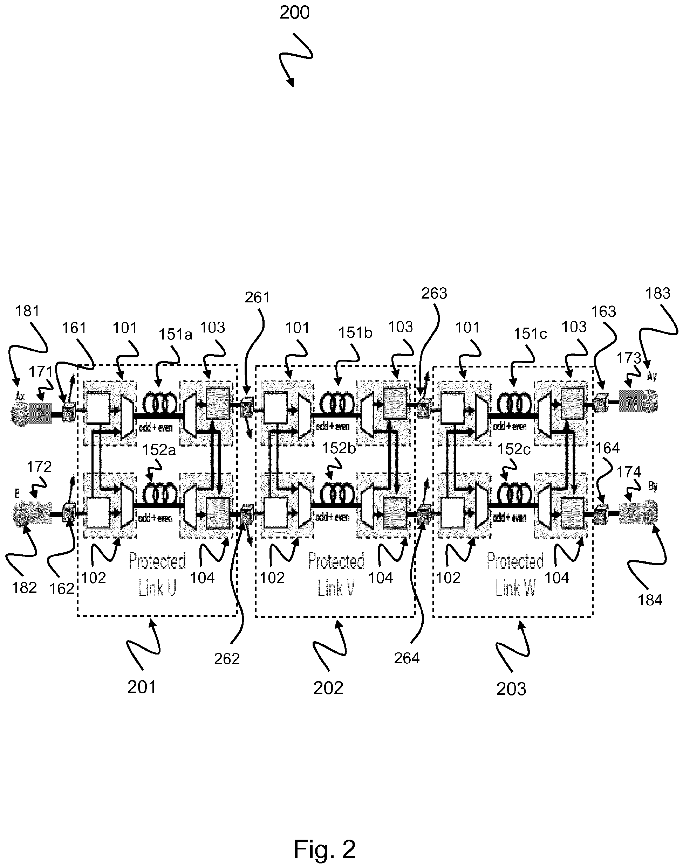

The concept as described with respect to Fig. 1 may be extended to many fiber links as described below with respect to Fig. 2. The characteristic is that always at the input of the long-distance fibers 151, 152 a coupler/interleaver 111, 113 and at the output an interleaver/switch device 133, 131 is present. With this each link 112, 122 is protected separately. The protection is completely predefined. There is no recalculation based on the actual load situation, which is generally the case with proactive restoration.

With the idea of an optical protection against single failures in an A/B network as described above, inexpensive ROADM with colored and directed add/drop ports may be used.

Fig. 2 shows a schematic diagram of a multiple optical link protection system 200 according to an implementation form. The system 200 shown in Fig. 2 comprises three optical link protection systems 201, 202, 203 corresponding to the optical link protection system 100 as described above with respect to Fig. 1. The three optical link protection systems 201, 202, 203 are coupled between a first 181 and a second 182 network, e.g. located in a first city X, and a third 183 and a fourth 184 network, e.g. located in a second city Y. The coupling is performed by ROADMs 161, 162 at the entry of the multiple optical link and ROADMs 163, 164 at the exit of the multiple optical link. Additional ROADMs 261, 262, 263, 264 are located in between the three optical link protection system 201, 202, 203. The additional ROADMs 261, 262, 263, 264 may be used for coupling in or coupling out further traffic, e.g. traffic from other cities, to the multiple optical link protection system 200. The first optical link protection system 201 denoted as "Protected Link U" comprises a first optical link protection device 101 coupled via a first optical fiber 151a to a third optical link protection device and a second optical link protection device 102 coupled via a second optical fiber 152a to a fourth optical link protection device 104. The second optical link protection system 202 denoted as "Protected Link V" comprises a first optical link protection device 101 coupled via a first optical fiber 151b to a third optical ink protection device and a second optical link protection device 102 coupled via a second optical fiber 152b to a fourth optical link protection device 104. The third optical link protection system 203 denoted as "Protected Link W" comprises a first optical link protection device 101 coupled via a first optical fiber 151c to a third optical link protection device and a second optical link protection device 102 coupled via a second optical fiber 152c to a fourth optical link protection device 104. The first to fourth optical link protection devices 101, 102, 103, 104 may correspond to the respective devices described above with respect to Fig. 1.

One of the requirements of QoS traffic in the IP backbone is the restoration of the traffic relation within 50 ms. In order to reach this ambitious goal the optical switches have to be able to switch quickly between both identical input spectra. A further requirement is also that the optical-electrical interfaces behind the device chain consisting of switch, ROADM and add/drop port are able to lock quickly to the new signal respectively. Generally optical coherent receivers of the current technology generation use complex algorithms in order to compensate different unwanted effects of signal distortion (e.g. chromatic dispersion, polarization mode dispersion). The required servo loops are complex and time-consuming. The devices depicted in Figures 1 and 2 are able to execute both, lock and signal detection within the target time of 50 milliseconds.

In an implementation form of the systems 100, 200, an option for the design of the network is used for a fast lock of the modules. The network is designed so as to make the accumulated chromatic dispersion on both protected fiber links identical as far as possible. In an implementation form of the systems 100, 200, an adjustment with dispersion compensating fiber, i.e. by negative dispersion is made. In an alternative implementation form, the adjustment is made with additional standard single mode fiber, i.e. by positive dispersion. In both cases the accumulated dispersion deviation is balanced. With this the filter taps of the FIR filter for dispersion compensation in the receiver module need not to be predicted and adjusted completely new, but only need to be adapted slightly. So a significantly faster locking of the modules can be achieved.

In an alternative implementation form of the system 100, 200, a virtual fully mesh on wavelength layer for all router locations of the IP backbone is created. All wavelengths of the WDM system can be used equally and are fixedly and passively routed via a centralized "mirror" in the middle of the network to their destination locations. In order to assure also here a robust and safe network operation, a double-star fiber topology is used, one star for the A-network and a completely disjoint star for the B-network. As described in the beginning, the traffic will be in case of a failure of an edge between a router location (e.g. A-router) and the central star point transferred via a short intra-city link to the B-router and from there via the B-star to the destination router. The optical link protection as described above with respect to Figures 1 and 2 will be used for the double-star fiber topology to provide the odd wavelength numbers (randomly) in an A-Router and the even wavelength numbers in a B-Router respectively. Obviously this approach gives away half of the transport capacity on the WDM layer, but this layer forms only a negligible part of the total costs. By this approach an optical link protection can be realized. Again a 3dB coupler and interleaver with crosswise intra-city links are applied before the total WDM spectrum (odd & even channels) is put on the disjoint long distance fibers. Also at the receiving end is no change: a second interleaver and a fast optical switch are separating even and odd channel numbers. In this implementation form, ROADMs are not needed; only cost-efficient terminal multiplexers are used. Therefore, this implementation form is even more cost-efficient than a meshed ROADM based A/B network.

In future optical networks there will be no fixed wavelength grid (today 50 GHz or 100 GHz) anymore. In an implementation form, the optical protection system 100, 200 as described with respect to Figures 1 and 2 is based on fixed passive interleaver filters for combining and separating the even and odd wavelength channels. In an implementation form, the passive interleaver filters possess a fixed wavelength grid of 50 GHz. In an alternative implementation form using flexible channel bandwidths, a modified optical link protection is applied. In that case, the passive interleavers are replaced with active flex grid WSS boards. Naturally with this the complexity of the network operation and the total costs increase. On the other side this guarantees a future-proof optical protection system, because it offers a solution for 400G or 1T interfaces which will be available in the near or middle future. Therefore, these interfaces are optimally utilized together with an effective protection in a redundant A&B IP network.

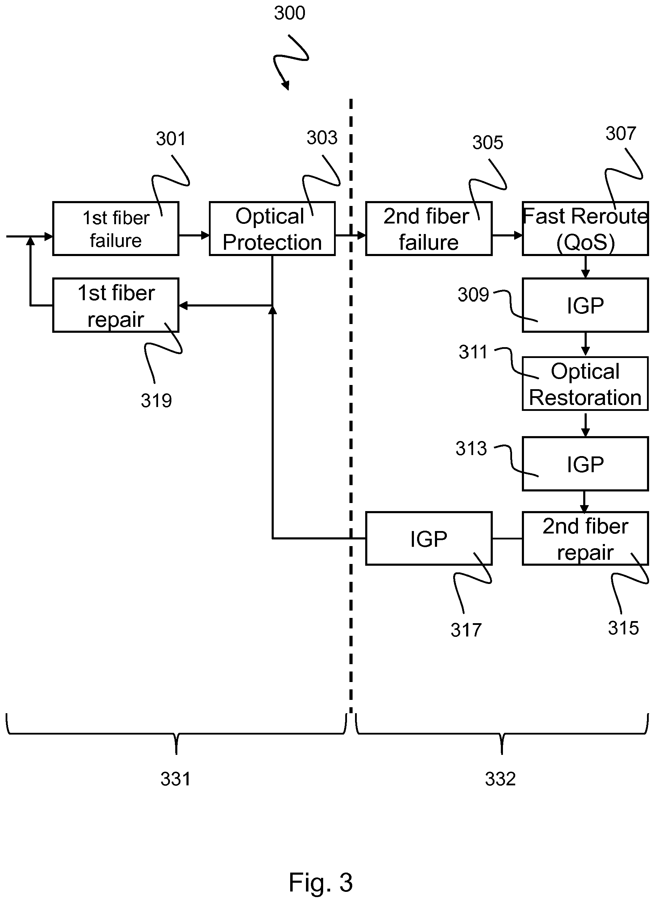

Fig. 3 shows a schematic diagram of an optical link protection system 300 protecting against double failures on both protected fiber links according to an implementation form.

The optical link protection system 300 is able to realize additionally to the protection against single failures an improved protection also against double failures on both protected fiber links. The optical link protection system 300 implements a multilayer protection concept based on optical protection.

Such a multilayer protection concept that can be applied in IP networks is based on adjustment according to the involved layers. In the multilayer protection system 300, FRR 307 forms the first step of resilience, IGP 309 forms the second step of resilience and optical restoration 311 forms the third step of resilience.

In a first stage 331 of the system 300 a first fiber failure 301 is compensated by optical protection 303 as described above with respect to Figures 1 and 2. A first fiber repair 319 is performed without degrading the performance of optical transmission. In a second stage 332 of the system 300 a second fiber failure 305 is compensated by a Fast Reroute 307, an IGP 309, an optical restoration 311 and further IGP 313. After a second fiber repair 315 and further IGP 317, the system is again using the optical protection 303 as described above with respect to Figures 1 and 2 while the first fiber repair 319 is performed.

FFR 307 as MPLS mechanism is added with different treatment of QoS and Best-Effort traffic. In that case the QoS traffic will be privileged and transported via other, already installed wavelengths, while the Best-Effort traffic may suffer under packet losses for a short time and in wide areas of the network. After that, an optical restoration 311 is applied, which restores the optical transmission capacity via edges, which are not affected by the failure.

Thus, the transport capacity can be restored within very few minutes. This task is taken over by ROADMs with so-called colorless & directionless (CD) add/drop ports and a multilayer control plane, e.g. GMPLS (General Multi-Protocol Label Switching). The advantage of this multilayer protection system 300 is that it fits to a different treatment of QoS and Best-Effort traffic. While the low-volume QoS traffic is restored further on with FRR 307 and IGP 309 on the IP layer with the current speed of 50 ms, the best-effort traffic has to suffer packet losses until the optical restoration 311 is finished and the IP layer has been switched to the optical protection capacity. By this, and this is the general advantage of this multilayer protection system 300, the expensive router interfaces can be utilized with much more than 50 % traffic. The 100 % failure case rule which leads often to a maximum of 50 % load may be omitted during network planning; in order to determine the load of the interfaces only the normal operation mode needs to be considered. In principle it is possible to fully load the router interfaces for the required traffic relations.

In order to avoid the use of comparatively expensive colorless and directionless ports, directionless but colored ports are used in an implementation form of the system 300. A suitable network design and appropriate assignment of wavelengths assures that the restored light paths can be operated with the same wavelength than the original paths. In a not fully loaded WDM network this goal can be reached comparatively easy. With growing traffic volume it will become more difficult to reserve sufficient wavelength capacities on protection edges. As this mechanism is only required in case of a double fault (which is anyhow not very likely) the protection can be regarded as acceptable when working in most cases, but not in any case.

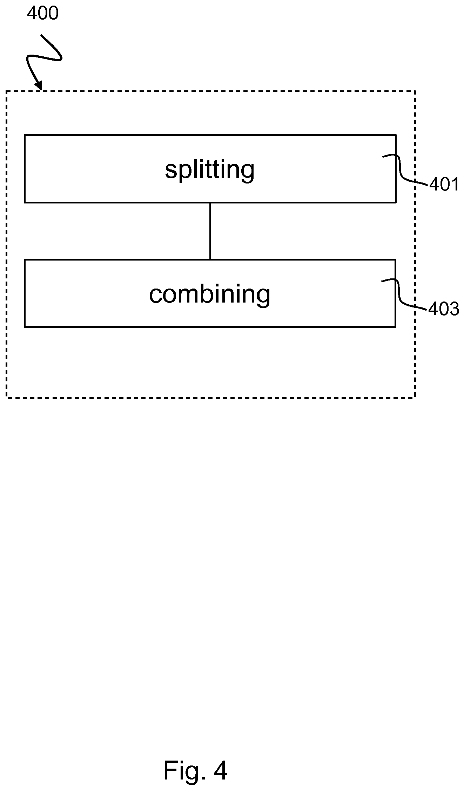

Fig. 4 shows a schematic diagram of a method 400 for optical link protection according to an implementation form.

The method 400 comprises splitting 401 a first optical transmission link carrying a first plurality of wavelengths into a main and a redundant sub-link, both sub-links carrying the first plurality of wavelengths. The method 400 comprises combining 403 the main sub-link of the first optical transmission link carrying the first plurality of wavelengths and a redundant sub-link of a second optical transmission link carrying a second plurality of wavelengths for providing a first protected optical transmission link carrying both, the first plurality of wavelengths and the second plurality of wavelengths.

In an implementation form, the first plurality of wavelengths comprises odd wavelengths and the second plurality of wavelengths comprises even wavelengths. In an alternative implementation form, the first plurality of wavelengths comprises even wavelengths and the second plurality of wavelengths comprises odd wavelengths.

In an implementation form, the method 400 further comprises splitting the second optical transmission link carrying the second plurality of wavelengths into a main and the redundant sub-link, both sub-links carrying the second plurality of wavelengths; and combining the main sub-link of the second optical transmission link carrying the second plurality of wavelengths and the redundant sub-link of the first optical transmission link carrying the first plurality of wavelengths for providing a second protected optical transmission link carrying both, the first plurality of wavelengths and the second plurality of wavelengths.

In an implementation form, the method 400 further comprises in case of a double failure on both, the first protected optical transmission link and the second protected optical transmission link: switching the first and the second pluralities of wavelengths to an alternate optical transmission link by using a Fast-Reroute mechanism 307 and an Interior Gateway Protocol 309 as described above with respect to Fig. 3; repairing 315, 319 at least one of the first protected optical transmission link and the second protected optical transmission link as described above with respect to Fig. 3; and switching the first and the second pluralities of wavelengths back to the repaired one of the first protected optical transmission link and the second protected optical transmission link.

From the foregoing, it will be apparent to those skilled in the art that a variety of methods, systems, computer programs on recording media, and the like, are provided.

The present disclosure also supports a computer program product including computer executable code or computer executable instructions that, when executed, causes at least one computer to execute the performing and computing steps described herein.

The present disclosure also supports a system configured to execute the performing and computing steps described herein.

Many alternatives, modifications, and variations will be apparent to those skilled in the art in light of the above teachings. Of course, those skilled in the art readily recognize that there are numerous applications of the invention beyond those described herein. While the present inventions has been described with reference to one or more particular embodiments, those skilled in the art recognize that many changes may be made thereto without departing from the scope of the present invention. It is therefore to be understood that within the scope of the appended claims, the inventions may be practiced otherwise than as specifically described herein.

## Claims

1. Optical transmission link protection device (101), comprising:
an optical splitter (111), configured for receiving a first optical transmission link (112) carrying a first plurality of wavelengths, the optical splitter (111) being configured to split the first optical transmission link (112) into a main (114) and a redundant (116) sub-link, both sub-links carrying the first plurality of wavelengths; and
an optical combiner (113), coupled to the optical splitter (111) and configured for receiving a redundant sub-link (126) of a second optical transmission link (122) carrying a second plurality of wavelengths, the optical combiner (113) being configured to combine the main sub-link (114) of the first optical transmission link (112) and the redundant sub-link (126) of the second optical transmission link (122) for providing a protected optical transmission link (118) carrying both, the first plurality of wavelengths and the second plurality of wavelengths.

2. The optical transmission link protection device (101) of claim 1, wherein the first (112) and the second (122) optical transmission links are received from two locally disjoint sub-networks (181, 182).

3. The optical transmission link protection device (101) of claim 1 or claim 2, wherein a placing of the first plurality of wavelengths on the first transmission link (112) is disjoint to a placing of the second plurality of wavelengths on the second optical transmission link (122).

4. The optical transmission link protection device (101) of one of the preceding claims, wherein the optical splitter (111) comprises a passive 3dB optical coupler.

5. The optical transmission link protection device (101) of one of the preceding claims, wherein the optical combiner (113) comprises an optical interleaver configured for interleaving the first plurality of wavelengths with the second plurality of wavelengths.

6. The optical transmission link protection device (101) of one of the preceding claims, wherein the first (112) and the second (122) optical transmission links carry equal parts of the first wavelengths and the second wavelengths as a whole.

7. The optical transmission link protection device (101) of one of the preceding claims, wherein the first optical transmission link (112) carries odd wavelengths and the second optical transmission link (122) carries even wavelengths or vice versa.

8. Optical reception link protection device (103), comprising:
an optical de-combiner (133), configured for receiving a protected optical reception link (118) carrying both, a first plurality of wavelengths and a second plurality of wavelengths, the optical de-combiner (133) being configured to separate the protected optical reception link (118) into a main sub-link (134) of a first optical reception link (138) carrying the first plurality of wavelengths and a redundant sub-link (146) of a second optical reception link (148) carrying the second plurality of wavelengths; and
an optical switch (131), coupled to the optical de-combiner (133), and configured for receiving a redundant sub-link (136) of the first optical reception link (138) carrying the first plurality of wavelengths, the optical switch (131) being configured to switch one of the main sub-link (134) of the first optical reception link (138) and the redundant sub-link (136) of the first optical transmission link (138).

9. The optical reception link protection device (103) of claim 8, wherein the optical switch (131) is configured to switch the one of the main (134) and the redundant (136) sub-links based on a power level at its input.

10. The optical reception link protection device (103) of one of claims 8 and 9, wherein the optical de-combiner (133) comprises an optical de-interleaver configured for de-interleaving the first plurality of wavelengths from the second plurality of wavelengths.

11. The optical reception link protection device (103) of one of claims 8 to 10, wherein the first plurality of wavelengths comprises odd wavelengths and the second plurality of wavelengths comprises even wavelengths or vice versa.

12. Optical link protection device (100), comprising:
an optical transmission link protection device (101) according to one of claims 1 to 7; and
an optical reception link protection device (103) according to one of claims 8 to 11,
wherein the optical combiner (113) and the optical de-combiner (133) are implemented by two identically constructed optical interleavers.

13. Method (400) for optical link protection, comprising:
splitting (401) a first optical transmission link carrying a first plurality of wavelengths into a main and a redundant sub-link, both sub-links carrying the first plurality of wavelengths; and
combining (403) the main sub-link of the first optical transmission link carrying the first plurality of wavelengths and a redundant sub-link of a second optical transmission link carrying a second plurality of wavelengths for providing a first protected optical transmission link carrying both, the first plurality of wavelengths and the second plurality of wavelengths.

14. The method (400) of claim 13, further comprising:
splitting the second optical transmission link carrying the second plurality of wavelengths into a main and the redundant sub-link, both sub-links carrying the second plurality of wavelengths; and
combining the main sub-link of the second optical transmission link carrying the second plurality of wavelengths and the redundant sub-link of the first optical transmission link carrying the first plurality of wavelengths for providing a second protected optical transmission link carrying both, the first plurality of wavelengths and the second plurality of wavelengths.

15. The method (400, 300) of claim 14, further comprising in case of a double failure on both, the first protected optical transmission link and the second protected optical transmission link:
switching the first and the second pluralities of wavelengths to an alternate optical transmission link by using a Fast-Reroute mechanism (307) and an Interior Gateway Protocol (309);
repairing (315, 319) at least one of the first protected optical transmission link and the second protected optical transmission link; and
switching the first and the second pluralities of wavelengths back to the repaired one of the first protected optical transmission link and the second protected optical transmission link.

## Patentansprüche

1. Schutzvorrichtung (101) einer optischen Übertragungsverbindung, die Folgendes umfasst:
einen optischen Splitter (111), der dazu ausgelegt ist, eine erste optische Übertragungsverbindung (112) zu empfangen, die eine erste Vielzahl von Wellenlängen transportiert, wobei der optische Splitter (111) dazu ausgelegt ist, die erste optische Übertragungsverbindung (112) in eine primäre (114) und eine redundante (116) Nebenverbindung aufzuteilen, wobei beide Nebenverbindungen die erste Vielzahl von Wellenlängen transportieren; und
einen optischen Kombinierer (113), der mit dem optischen Splitter (111) gekoppelt und dazu ausgelegt ist, eine redundante Nebenverbindung (126) einer zweiten optischen Übertragungsverbindung (122) zu empfangen, die eine zweite Vielzahl von Wellenlängen transportiert, wobei der optische Kombinierer (113) dazu ausgelegt ist, die primäre Nebenverbindung (114) der ersten optischen Übertragungsverbindung (112) und die redundante Nebenverbindung (126) der zweiten optischen Übertragungsverbindung (122) zu kombinieren, um eine geschützte optische Übertragungsverbindung (118) bereitzustellen, die sowohl die erste Vielzahl von Wellenlängen als auch die zweite Vielzahl von Wellenlängen transportiert.

2. Schutzvorrichtung (101) einer optischen Übertragungsverbindung nach Anspruch 1, wobei die erste (112) und die zweite (122) optische Übertragungsverbindung von zwei lokal disjunkten Teilnetzwerken (181, 182) empfangen werden.

3. Schutzvorrichtung (101) einer optischen Übertragungsverbindung nach Anspruch 1 oder Anspruch 2, wobei eine Platzierung der ersten Vielzahl von Wellenlängen auf der ersten Übertragungsverbindung (112) disjunkt zu einer Platzierung der zweiten Vielzahl von Wellenlängen auf der zweiten optischen Übertragungsverbindung (122) ist.

4. Schutzvorrichtung (101) einer optischen Übertragungsverbindung nach einem der vorhergehenden Ansprüche, wobei der optische Splitter (111) einen passiven optischen 3-dB-Koppler umfasst.

5. Schutzvorrichtung (101) einer optischen Übertragungsverbindung nach einem der vorhergehenden Ansprüche, wobei der optische Kombinierer (113) einen optischen Verschachteler umfasst, der dazu ausgelegt ist, die erste Vielzahl von Wellenlängen mit der zweiten Vielzahl von Wellenlängen zu verschachteln.

6. Schutzvorrichtung (101) einer optischen Übertragungsverbindung nach einem der vorhergehenden Ansprüche, wobei die erste (112) und die zweite (122) optische Übertragungsverbindung gleiche Teile der ersten Wellenlängen und der zweiten Wellenlängen als Ganzes transportieren.

7. Schutzvorrichtung (101) einer optischen Übertragungsverbindung nach einem der vorhergehenden Ansprüche, wobei die erste optische Übertragungsverbindung (112) ungerade Wellenlängen, und die zweite optische Übertragungsverbindung (122) gerade Wellenlängen transportiert, oder umgekehrt.

8. Schutzvorrichtung (103) einer optischen Empfangsverbindung, die Folgendes umfasst:
einen optischen Dekombinierer (133), der dazu ausgelegt ist, eine geschützte optische Empfangsverbindung (118) zu empfangen, die sowohl eine erste Vielzahl von Wellenlängen als auch eine zweite Vielzahl von Wellenlängen transportiert, wobei der optische Dekombinierer (133) dazu ausgelegt ist, die geschützte optische Empfangsverbindung (118) in eine primäre Nebenverbindung (134) einer ersten optischen Empfangsverbindung (138), welche die erste Vielzahl von Wellenlängen transportiert, und eine redundante Nebenverbindung (146) einer zweiten optischen Empfangsverbindung (148), welche die zweite Vielzahl von Wellenlängen transportiert, aufzuteilen; und
einen optischen Schalter (131), der mit dem optischen Dekombinierer (133) gekoppelt und dazu ausgelegt ist, eine redundante Nebenverbindung (136) der ersten optischen Empfangsverbindung (138), welche die erste Vielzahl von Wellenlängen transportiert, zu empfangen, wobei der optische Schalter (131) dazu ausgelegt ist, eine der primären Nebenverbindung (134) der ersten optischen Empfangsverbindung (138) und der redundanten Nebenverbindung (136) der ersten optischen Übertragungsverbindung (138) umzuschalten.

9. Schutzvorrichtung (103) der optischen Empfangsverbindung nach Anspruch 8, wobei der optische Schalter (131) dazu ausgelegt ist, eine der primären (134) und der redundanten (136) Nebenverbindung auf der Basis eines Leistungspegels an seinem Eingang umzuschalten.

10. Schutzvorrichtung (103) einer optischen Empfangsverbindung nach einem der Ansprüche 8 und 9, wobei der optische Dekombinierer (133) einen optischen Entschachteler umfasst, der dazu ausgelegt ist, die erste Vielzahl von Wellenlängen von der zweiten Vielzahl von Wellenlängen zu entschachteln.

11. Schutzvorrichtung (103) einer optischen Empfangsverbindung nach einem der Ansprüche 8 bis 10, wobei die erste Vielzahl von Wellenlängen ungerade Wellenlängen, und die zweite Vielzahl von Wellenlängen gerade Wellenlängen umfasst, oder umgekehrt.

12. Schutzvorrichtung (100) einer optischen Verbindung, die Folgendes umfasst:
eine Schutzvorrichtung (101) einer optischen Übertragungsverbindung gemäß einem der Ansprüche 1 bis 7; und
eine Schutzvorrichtung (103) einer optischen Empfangsverbindung gemäß einem der Ansprüche 8 bis 11,
wobei der optische Kombinierer (113) und der optische Dekombinierer (133) durch zwei identisch aufgebaute optische Verschachteler implementiert werden.

13. Verfahren (400) zum Schutz einer optischen Verbindung, das Folgendes umfasst:
Aufteilen (401) einer ersten optischen Übertragungsverbindung, die eine erste Vielzahl von Wellenlängen transportiert, in eine primäre und eine redundante Nebenverbindung, wobei beide Nebenverbindungen die erste Vielzahl von Wellenlängen transportieren; und
Kombinieren (403) der primären Nebenverbindung der ersten optischen Übertragungsverbindung, welche die erste Vielzahl von Wellenlängen transportiert, und einer redundanten Nebenverbindung einer zweiten optischen Übertragungsverbindung, welche eine zweite Vielzahl von Wellenlängen transportiert, um eine erste geschützte optische Übertragungsverbindung bereitzustellen, die sowohl die erste Vielzahl von Wellenlängen als auch die zweite Vielzahl von Wellenlängen transportiert.

14. Verfahren (400) nach Anspruch 13, das ferner Folgendes umfasst:
Aufteilen der zweiten optischen Übertragungsverbindung, welche die zweite Vielzahl von Wellenlängen transportiert, in eine primäre und die redundante Nebenverbindung, wobei beide Nebenverbindungen die zweite Vielzahl von Wellenlängen transportieren; und
Kombinieren der primären Nebenverbindung der zweiten optischen Übertragungsverbindung, welche die zweite Vielzahl von Wellenlängen transportiert, und der redundanten Nebenverbindung der ersten optischen Übertragungsverbindung, welche die erste Vielzahl von Wellenlängen transportiert, um eine zweite geschützte optische Übertragungsverbindung bereitzustellen, die sowohl die erste Vielzahl von Wellenlängen als auch die zweite Vielzahl von Wellenlängen transportiert.

15. Verfahren (400, 300) nach Anspruch 14, das im Falle eines doppelten Ausfalls sowohl der ersten geschützten optischen Übertragungsverbindung als auch der zweiten geschützten optischen Übertragungsverbindung ferner Folgendes umfasst:
Umschalten der ersten und der zweiten Vielzahl von Wellenlängen auf eine alternative optische Übertragungsverbindung durch Verwenden eines Fast-Reroute-Mechanismus (307) und eines Interior Gateway Protocol (309);
Reparieren (315, 319) mindestens einer der ersten geschützten optischen Übertragungsverbindung und der zweiten geschützten optischen Übertragungsverbindung; und
Umschalten der ersten und der zweiten Vielzahl von Wellenlängen zurück auf die reparierte der ersten geschützten optischen Übertragungsverbindung und der zweiten geschützten optischen Übertragungsverbindung.

## Revendications

1. Dispositif de protection de liaison de transmission optique (101) comprenant :
un diviseur optique (111), configuré pour recevoir une première liaison de transmission optique (112) ayant une première pluralité de longueurs d'onde, le diviseur optique (111) étant configuré pour diviser la première liaison de transmission optique (112) en une sous-liaison principale (114) et une sous-liaison redondante (116), les deux sous-liaisons ayant la première pluralité de longueurs d'onde ; et
un combinateur optique (113), couplé au diviseur optique (111) et configuré pour recevoir une sous-liaison redondante (126) d'une seconde liaison de transmission optique (122) ayant une seconde pluralité de longueurs d'onde, le combinateur optique (113) étant configuré pour combiner la sous-liaison principale (114) de la première liaison de transmission optique (112) et la sous-liaison redondante (126) de la seconde liaison de transmission optique (122) pour fournir une liaison de transmission optique protégée (118) ayant à la fois la première pluralité de longueurs d'onde et la seconde pluralité de longueurs d'onde.

2. Dispositif de protection de liaison de transmission optique (101) selon la revendication 1, dans lequel la première (112) et la seconde (122) liaison de transmission optique sont reçues en provenance de deux sous-réseaux localement distincts (181, 182).

3. Dispositif de protection de liaison de transmission optique (101) selon la revendication 1 ou la revendication 2, dans lequel un placement de la première pluralité de longueurs d'onde sur la première liaison de transmission (112) est distinct d'un placement de la seconde pluralité de longueurs d'onde sur la seconde liaison de transmission optique (122).

4. Dispositif de protection de liaison de transmission optique (101) selon l'une quelconque des revendications précédentes, dans lequel le diviseur optique (111) comprend un coupleur optique 3 dB passif.

5. Dispositif de protection de liaison de transmission optique (101) selon l'une quelconque des revendications précédentes, dans lequel le combinateur optique (113) comprend un entrelaceur optique configuré pour entrelacer la première pluralité de longueurs d'onde avec la seconde pluralité de longueurs d'onde.

6. Dispositif de protection de liaison de transmission optique (101) selon l'une quelconque des revendications précédentes, dans lequel la première (112) et la seconde (122) liaison de transmission optique comportent des parties égales des premières longueurs d'onde et des secondes longueurs d'onde dans son ensemble.

7. Dispositif de protection de liaison de transmission optique (101) selon l'une quelconque des revendications précédentes, dans lequel la première liaison de transmission optique (112) possède des longueurs d'onde impaires et la seconde liaison de transmission optique (122) possède des longueurs d'onde paires ou vice versa.

8. Dispositif de protection de liaison de réception optique (103) comprenant :
un décombinateur optique (133), configuré pour recevoir une liaison de réception optique protégée (118) ayant à la fois une première pluralité de longueurs d'onde et une seconde pluralité de longueurs d'onde, le décombinateur optique (133) étant configuré pour séparer la liaison de réception optique protégée (118) en une sous-liaison principale (134) d'une première liaison de réception optique (138) ayant la première pluralité de longueurs d'onde et une sous-liaison redondante (146) d'une seconde liaison de réception optique (148) ayant la seconde pluralité de longueurs d'onde ; et
un commutateur optique (131), couplé au décombinateur optique (133), et configuré pour recevoir une sous-liaison redondante (136) de la première liaison de réception optique (138) ayant la première pluralité de longueurs d'onde, le commutateur optique (131) étant configuré pour commuter soit la sous-liaison principale (134) de la première liaison de réception optique (138), soit la sous-liaison redondante (136) de la seconde liaison de réception optique (138).

9. Dispositif de protection de liaison de réception optique (103) selon la revendication 8, dans lequel le commutateur optique (131) est configuré pour commuter soit la sous-liaison principale (134), soit la sous-liaison redondante (136) en se basant sur un niveau de puissance au niveau de son entrée.

10. Dispositif de protection de liaison de réception optique (103) selon l'une des revendications 8 et 9, dans lequel le décombinateur optique (133) comprend un désentrelaceur optique configuré pour désentrelacer la première pluralité de longueurs d'onde de la seconde pluralité de longueurs d'onde.

11. Dispositif de protection de liaison de réception optique (103) selon l'une des revendications 8 à 10, dans lequel la première pluralité de longueurs d'onde comprend des longueurs d'onde impaires et la seconde pluralité de longueurs d'onde comprend des longueurs d'onde paires ou vice versa.

12. Dispositif de protection de liaison optique (100) comprenant :
un dispositif de protection de liaison de transmission optique (101) selon l'une des revendications 1 à 7 ; et
un dispositif de protection de liaison de réception optique (103) selon l'une des revendications 8 à 11,
dans lequel le combinateur optique (113) et le décombinateur optique (133) sont mis en oeuvre par deux entrelaceurs optiques construits de manière identique.

13. Procédé (400) pour une protection de liaison optique consistant :
à diviser (401) une première liaison de transmission optique ayant une première pluralité de longueurs d'onde en une sous-liaison principale et une sous-liaison redondante, les deux sous-liaisons ayant la première pluralité de longueurs d'onde ; et
à combiner (403) la sous-liaison principale de la première liaison de transmission optique ayant la première pluralité de longueurs d'onde et une sous-liaison redondante d'une seconde liaison de transmission optique ayant une seconde pluralité de longueurs d'onde pour fournir une première liaison de transmission optique protégée ayant à la fois la première pluralité de longueurs d'onde et la seconde pluralité de longueurs d'onde.

14. Procédé (400) selon la revendication 13, consistant en outre :
à diviser la seconde liaison de transmission optique ayant la seconde pluralité de longueurs d'onde en une sous-liaison principale et une sous-liaison redondante, les deux sous-liaisons ayant la seconde pluralité de longueurs d'onde ; et
à combiner la sous-liaison principale de la seconde liaison de transmission optique ayant la seconde pluralité de longueurs d'onde et la sous-liaison redondante de la première liaison de transmission optique ayant la première pluralité de longueurs d'onde pour fournir une seconde liaison de transmission optique protégée ayant à la fois la première pluralité de longueurs d'onde et la seconde pluralité de longueurs d'onde.

15. Procédé (400, 300) selon la revendication 14, consistant en outre dans le cas d'une double défaillance sur à la fois la première liaison de transmission optique protégée et de la seconde liaison de transmission optique protégée :
à commuter la première et la seconde pluralité de longueurs d'onde à une liaison de transmission optique alternative en utilisant un mécanisme de réacheminement rapide (307) et un protocole de passerelle intérieure (309) ;
à réparer (315, 319) la première liaison de transmission optique protégée et/ou la seconde liaison de transmission optique protégée ; et
à commuter la première et la seconde pluralité de longueurs d'onde à nouveau à la liaison réparée de la première liaison de transmission optique protégée et de la seconde liaison de transmission optique protégée.
